# EUROPÄISCHE PATENTANMELDUNG

(11) **EP 1 884 402 A1**
(43) Veröffentlichungstag der Anmeldung: **06.02.2008**
(21) Anmeldenummer: 06015377.2
(22) Anmeldetag: 24.07.2006
(51) Int. Cl.: B60P 1/44, F15B 15/06

(54) **Hub-/Schwenkvorrichtung für Ladebordwände und/oder -rampen**

(71) Anmelder: Kinshofer GmbH, 83666 Waakirchen (DE)
(72) Erfinder: Friedrich, Thomas, 83707 Bad Wiessee (DE)
(74) Vertreter: Thoma, Michael

(57) **Zusammenfassung**

Die vorliegende Erfindung betrifft eine Hub-/Schwenkvorrichtung für Ladebordwände (5) und/oder Laderampen von Fahrzeugen und dergleichen, mit zumindest einem Hubarm (2), der einerseits durch ein Hubarmschwenklager (10) um eine liegende Hubarmschwenkachse (6) an dem Fahrzeug (4) schwenkbar anlenkbar ist und andererseits ein Ladebordwandschwenklager (11) zur schwenkbaren Befestigung der Ladebordwand (5) um eine liegende Ladebordwandschwenkachse (7) aufweist, wobei dem Hubarmschwenklager (10) und/oder dem Ladebordwandschwenklager (11) ein Schwenkantrieb (8,9) zum Schwenken des Hubarms (2) um die Hubarmschwenkachse (6) und/oder der Ladebordwand (5) zum Hubarm (2) zugeordnet ist. Erfindungsgemäß zeichnet sich die Hub/Schwenkvorrichtung dadurch aus, dass der Schwenkantrieb (8,9) von einem hydraulischen Drehmotor gebildet ist, der eine in einem Gehäuse (15) drehbar gelagerte Motorwelle (14) aufweist, die mit zumindest einem axial antreibbaren, gegenüber dem Gehäuse (15) drehfesten Antriebsstück (16) in Schraubeingriff steht.

## Beschreibung

Die vorliegende Erfindung betrifft eine Hub-/Schwenkvorrichtung für Ladebordwände und/oder -rampen von Fahrzeugen und dergleichen, mit zumindest einem Hubarm, der einerseits durch ein Hubarmschwenklager um eine liegende Hubarmschwenkachse schwenkbar an dem Fahrzeug anlenkbar ist und andererseits ein Ladebordwandschwenklager zur schwenkbaren Befestigung der Ladebordwand um eine liegende. Ladebordwandschwenkachse aufweist, wobei ein Schwenkantrieb zum Schwenken des Hubarms um die Hubarmschwenkachse und/oder der Ladebordwand oder -rampe zum Hubarm vorgesehen ist.

Anhebbare und absenkbare Ladebordwände von Lastwagen können regelmäßig aus ihrer etwa senkrechten Transportstellung, in der sie an die Ladeöffnung des Lastwagens hingeschwenkt sind, in eine abgesenkte Beladestellung geschwenkt werden, in der sie auf dem Boden aufsitzen bzw. in vorbestimmter Höhe etwa parallel zum Boden auf diesem gehalten werden. Dabei sind die Ladebordwände regelmäßig an zwei Hubarmen schwenkbar gelagert, so dass sie aus der vertikalen Transportstellung in die horizontale Beladestellung geschwenkt werden können. Zudem sind die Hubarme selbst schwenkbar an dem Fahrzeugchassis angelenkt, um die Hubbewegung zwischen der Beladekante des Fahrzeugs zur Beladekante des Gebäudes bzw. dem Boden zu bewerkstelligen. Die Hubarme können hierbei regelmäßig durch einen Schwenkantrieb nach oben geschwenkt bzw. abgesenkt werden. Die Schwenkbewegung der Ladebordwand relativ zu den Hubarmen wird dabei über eine mechanische Zwangssteuerung in Form von Lenkerhebeln und Stellgestängen zwischen der Ladebordwand und dem Fahrzeugchassis erreicht, die eine Bewegung der Hubarme relativ zum Fahrzeugchassis in eine Zwangsbewegung der Ladebordwand relativ zu den Hubarmen umsetzen. Da die Kinematik der Ladebordwand durch ihre Endstellungen vorgegeben ist und überdies bei Hubbewegungen zwischen Boden und Ladebodenkante zumindest annähernd eine Parallelführung erreicht werden soll, ergeben sich für diese mechanische Zwangssteuerung schwierig zu erfüllende Anforderungen, die meist aufwendige Lenkeranordnungen bedingen. Die Ladebordwandbewegung ist dabei nicht oder nur kaum an variierende Randbedingungen, wie z. B. Fahrzeugbeladung an Hanglagen, anpassbar. Zudem entstehen an den Hebeln und Stellgestängen sehr große Kräfte, wobei zur Begrenzung der Stellkräfte ausreichend groß bemessene Anlenkhebel andererseits die bodenebene Auflegbarkeit der Ladebordwand bzw. -rampe behindern. Die Vielgliedrigkeit der Lenkeranordnungen erhöht darüber hinaus den Wartungsaufwand und bietet Umgebungseinflüssen wie Streusalz viele Angriffsflächen.

Hier versucht die vorliegende Erfindung Abhilfe zu schaffen. Ihr liegt die Aufgabe zugrunde, eine verbesserte Hub-/Schwenkvorrichtung für Ladebordwände von Fahrzeugen zu schaffen, die Nachteile des Standes der Technik vermeidet und letzteren in vorteilhafter Weise weiterbildet. Vorzugsweise soll die Hub-/Schwenkvorrichtung kompakt bauen, eine variablere Bewegungssteuerung sowie einfache Anpassung der Kinematik der Ladebordwand an variierende Anforderungen erlauben und zudem einfach zu montieren sein.

Diese Aufgabe wird erfindungsgemäß durch eine Hub-/Schwenkvorrichtung gemäß Anspruch 1 gelöst. Bevorzugte Ausgestaltungen der Erfindung sind Gegenstand der abhängigen Ansprüche.

Erfindungsgemäß wird also anstelle der herkömmlichen Schwenkantriebe mit Hydraulikzylindern zum Verschwenken der Hubarme und Zwangssteuerung der Ladebordwand durch Schwenklenker ein hydraulischer Drehmotor zum Verschwenken der Hubarme um die Hubarmschwenkachse und/oder zum Verschwenken der Ladebordwand bzw. -rampe relativ zu den Hubarmen verwendet, der eine in einem Gehäuse drehbar gelagerte Motorwelle aufweist, die mit einem axial antreibbaren, im Gehäuse drehfest angeordneten Antriebsstück in Schraubeingriff steht. In kinematischer Umkehrung könnte das Antriebsstück alternativ oder zusätzlich auch mit dem Gehäuse in Schraubeingriff stehen, wobei aus fertigungstechnischen Gründen jedoch die zuvor genannte Ausführung mit Schraubeingriff nur an der Motorwelle bevorzugt ist. Wird das Antriebsstück durch Hydraulikdruck axial verschoben, setzt der Gewindeeingriff die Axialbewegung des Antriebsstücks in eine Drehbewegung der Motorwelle um. Dabei sind das Gehäuse und die Motorwelle mit den zueinander zu verschwenkenden Teilen gekoppelt, vorzugsweise unmittelbar damit verbunden. Die Beseitigung der im Stand der Technik üblichen Hydraulikzylinder zum Verschwenken der Hubarme und der dafür nötigen Anlenkstellen sowie der Schwenklenker zur Umsetzung der Hubarmschwenkbewegungen in zusätzliche Ladebordwandbewegungen um die Ladebordwandschwenkachse spart etliche Lager- und Schmierstellen ein und vereinfacht die Wartung beträchtlich. Zudem ist im Ladebereich des Fahrzeugs weniger Gestrüpp, das die Zugänglichkeit zum Fahrzeugchassis erschwert. Ferner bietet die erfindungsgemäße Lösung weniger Angriffsstellen für Streusalz, Splitt und dergleichen.

Die vorliegend vorgeschlagene Hub-/Schwenkvorrichtung verzichtet vorteilhafterweise auf eine mechanische Zwangskopplung der Ladebordwandbewegung an die Hubarmstellung. Dabei kann zum Schwenken der Ladebordwand relativ zu dem zumindest einen Hubarm ein zweiter Drehmotor vorgesehen sein, der vorteilhafterweise von dem ersten Drehmotor zum Schwenken des zumindest einen Hubarms separat und unabhängig ansteuerbar ist. Dies ermöglicht es, für eine vorbestimmte Hubarmstellung die Ladebordwand ohne Hubarmbewegung in verschiedene Stellungen zu bringen. Selbstverständlich kann zur Erzielung einer harmonischen Ladebordwandbewegung von der Steuerung eine Schwenkbewegung der Ladebordwand relativ zu dem zumindest einen Hubarm in Abhängigkeit von dessen Bewegung vorgegeben werden. Durch den separaten zweiten Drehmotor ist es jedoch in einfacher Weise möglich, diese Abhängigkeit zu verändern und z. B. mehrere Bewegungsverläufe der Ladebordwand in Abhängigkeit der Hubarmbewegung vorzugeben. Hierdurch kann auch ein beträchtlicher Zeitgewinn bei der Ladebordwandbetätigung erreicht werden, da je nach Bewegung unnötige Zwischenstellungen eingespart werden können. So kann beispielsweise beim Absenken der Ladebordwand aus der angeklappten Transportstellung in die auf den Boden abgesenkte Beladestellung ohne Ware die im Stand der Technik zwangsweise anzufahrende Umladestellung, in der die Hubarme hochgeschwenkt sind und die Ladebordwand etwa horizontal von der Ladebodenkante wegsteht, ausgelassen werden, wobei gleichzeitig die Hubarme abgewippt und die Ladebordwand abgesenkt werden. Durch den Wegfall der mechanischen Zwangskoppelung der beiden Schwenkbewegungen von Hubarmen und Ladebordwand und die unabhängige Ansteuerbarkeit der beiden Bewegungsachsen muß die genannte Zwischenstellung zum Umladen von der Ladebordwand in das Fahrzeug und umgekehrt nur angefahren werden, wenn dies gewünscht ist. Vorteilhafterweise kann eine Steuerungsvorrichtung vorgesehen sein, die die beiden Drehmotoren und damit die beiden Schwenkmotoren entsprechend verschiedenen gewünschten, vorteilhafterweise vorprogrammierbaren Kinematikabläufen ansteuert. Die Steuervorrichtung kann verschiedene Abhängigkeiten zwischen Schwenkbewegung der Hubarme und Schwenkbewegung der Ladebordwand relativ zu den Hubarmen bewirken.

Um eine besonders kompakte Anordnung zu erreichen, bildet das mit der Motorwelle und/oder dem Gehäuse in Schraubeingriff stehende Antriebsstück selbst einen hydraulisch beaufschlagbaren Kolben, der axial verschieblich in dem Gehäuse gelagert ist und mit dem Gewinde der Motorwelle in Eingriff steht. Grundsätzlich möglich wäre es auch, das axiale Antriebsstück durch einen separaten Kolben, insbesondere einen Plungerkolben, anzutreiben, was Vorteile hinsichtlich einer Begrenzung der entstehenden Kräfte haben kann. Die vorgenannte Ausbildung, bei der das Antriebsstück selbst den Kolben bildet, ist jedoch von Vorteil hinsichtlich der Baugröße und reduziert überdies die Bauteilezahl.

In Weiterbildung der Erfindung kann dabei jeder Drehmotor zumindest zwei gegenläufig ausgebildete Antriebsstücke aufweisen, von denen eines über ein Linksgewinde und das andere über ein Rechtsgewinde mit der Motorwelle in Eingriff steht. Durch solche paarweise gegenläufig angeordneten Antriebsstücke können Axialkräfte auf die Motorwelle vermieden werden und überdies höhere Drehmomente erzielt werden. Gegebenenfalls können auf einer Motorwelle auch mehrere solcher gegenläufiger Antriebsstücke sitzen, um mit begrenztem Hydraulikdruck hohe Drehmomente erzielen zu können.

Nach einer vorteilhaften Ausführung der Erfindung sitzt der zweite Drehmotor zum Verschwenken der Ladebordwand relativ zu dem zumindest einen Hubarm an dem auskragenden Ende des Hubarms, wobei der zweite Drehmotor gleichzeitig das Ladebordwandschwenklager bilden kann. Bei dieser Ausführung sitzt der zweite Drehmotor also beabstandet von dem ersten Drehmotor zum Schwenken der Hubarme an dem gegenüberliegenden Ende des zumindest einen Hubarms unmittelbar an dem Gelenkpunkt der Ladebordwand. Hierdurch wird das Drehmoment zur Ladebordwandbewegung unmittelbar dort erzeugt, wo es erforderlich ist. Zusätzliche Axialkräfte auf den Hubarm und dessen Lagerung, wie sie bei herkömmlichen Lenker- und Gestängelösungen auftreten, können vermieden werden.

Vorteilhafterweise erfolgt eine Ölzuführung zu dem zweiten Drehmotor an dem auskragenden Ende des zumindest einen Hubarms schlauchlos. In Weiterbildung der Erfindung kann in dem zumindest einen Hubarm ein Hydraulikkanal zur Versorgung des zweiten Drehmotors vorgesehen sein. Vorteilhafterweise kann dabei eine zentrale Ölzuführung an der Motorwelle des ersten Drehmotors vorgesehen sein, von der einerseits durch einen Druckkanal in der genannten Motorwelle des ersten Drehmotors der erste Drehmotor gespeist wird, während über eine Abzweigung in den zumindest einen Hubarm hinein der zweite Drehmotor über den Hubarm gespeist wird.

Alternativ zu der Anordnung des zweiten Drehmotors am auskragenden Ende des zumindest einen Hubarms kann der zweite Drehmotor mit dem ersten Drehmotor zu einer Motoreinheit zusammengefasst sein bzw. ebenso wie der erste Drehmotor im Bereich des Hubarmschwenklagers am Fahrzeugchassis angeordnet sein, insbesondere das Hubarmschwenklager bilden. Eine Übertragung der Bewegung des zweiten Drehmotors auf die Ladebordwand kann über ein Lenkergestänge erfolgen, das einerseits an der Motorwelle des zweiten Drehmotors angelenkt und andererseits mit der Ladebordwand verbunden ist.

Die beiden Drehmotoren sind dabei vorteilhafterweise in ein gemeinsames Motorgehäuse integriert, jedoch erfolgt die Energiebeaufschlagung des zweiten Drehmotors unabhängig von der des ersten Drehmotors, insbesondere über separate Druckkammern.

Vorteilhafterweise können dabei die beiden Motorwellen der beiden Drehmotoren zueinander koaxial angeordnet sein. Insbesondere kann die Motorwelle des einen Drehmotors in der hohl ausgebildeten Motorwelle des anderen Drehmotors aufgenommen sein.

In vorteilhafter Weiterbildung der Erfindung besitzt zumindest der zweite Drehmotor zum Verschwenken der Ladebordwand relativ zu dem zumindest einen Hubarm einen Schwenkbereich von über 100°, vorzugsweise von über 180°, so dass die Ladebordwand nicht nur von der im wesentlichen vertikalen Transportstellung in die im wesentlichen horizontale Beladestellung, also über einen Schwenkbereich von etwa 90° geschwenkt werden kann. Der große Schwenkbereich des zweiten Drehmotors erlaubt es insbesondere auch, die Ladebordwand in weitere Betriebsstellungen zu bringen. Insbesondere kann die Ladebordwand ggf. an den zumindest einen Hubarm angeklappt und/oder unter den Boden des Fahrzeugchassis geschwenkt werden. Dies ist insbesondere dann von Vorteil, wenn die Ladebordwand klappbar ausgebildet ist, so dass ein Ladebordwandteil relativ zu dem anderen Ladebordwandteil zusammengeklappt werden kann, vorzugsweise um eine zur Ladebordwandschwenkachse parallele Klappachse.

Um eine besonders flachbauende Anordnung der Hub-/Schwenkvorrichtung zu erreichen, kann das Gehäuse des ersten und/oder zweiten Drehmotors einen von der Kreisform abweichenden Querschnitt, insbesondere einen flach gedrückten, ovalen Querschnitt besitzen. Von der flachen, kompakten Bauweise abgesehen, ist bei dieser Bauform die Verdrehsicherung des Antriebsstücks bzw. des Kolbens gegenüber dem Gehäuse sozusagen inklusive. Alternativ oder zusätzlich kann das Antriebsstück auch über eine separate längsnutförmige Verdrehsicherung, insbesondere in Form eines Keilwellen-Nabenprofils, gegen Verdrehen gesichert sein.

Vorteilhafterweise kann ein den Schraubeingriff bewirkendes Flächenpaar an Kolben und Welle und/oder Kolben und Gehäuse gleichzeitig ein Dichtflächenpaar zur Abdichtung der Druckkammer zur Druckbeaufschlagung des Kolbens bilden. Derselbe Kolbenabschnitt dient gleichzeitig der Drehmomentübertragung und der Abdichtung. Hierdurch kann eine beträchtlich verkürzte Baulänge erreicht werden, da die axiale Beabstandung zwischen Dichtungsabschnitt und Drehführungs- bzw. Schraubeingriffabschnitt des Kolbens entfällt. Zudem können die jeweiligen Bauteile, insbesondere Gehäuse und Welle, endlos hergestellt und bedarfs- und längengerecht konfektioniert werden.

Vorteilhafterweise weist der Kolben dabei auf seinen beiden gegenüberliegenden Seiten gleich große effektive Kolbenflächen auf. Die vollständige Kolbenfläche kann effektiv mit gleichen Kräften in beiden Richtungen genutzt werden. Faktisch steht auf beiden Kolbenseiten die gesamte Gehäuseinnendurchmesserfläche lediglich vermindert um den Wellenquerschnitt als Kolbendruckfläche zur Verfügung. Hierdurch können mit gleichen Hydraulikdrücken in beiden Antriebsrichtungen dieselben Drehmomente erzeugt werden. Zudem ergibt sich für einen gegebenen Druck eine maximale Drehmomentausbeute.

In Weiterbildung der Erfindung kann der Schraubeingriff zwischen Welle und Kolben auch anders als durch einen herkömmlichen Gewindeverzahnungsabschnitt der Welle und des Kolbens erzielt werden. Die Welle kann in sich verdreht sein, so dass ihre Außenkontur ein spiralartig um die Längsachse der Welle verdrehtes Polygonprofil bildet. Dies vereinfacht nicht nur die Fertigung, sondern verbessert auch die Dichtbarkeit zwischen Welle und Kolben. Die mit dem verdrehten Polygonprofil in Schraubeingriff stehende Innenmantelfläche des Kolbens kann frei von Gewindeverzahnungen ausgebildet sein und einen kontinuierlichen, stetigen Oberflächenverlauf ohne Eindrückungen und Vorsprünge besitzen, so dass der Kolben und das verdrehte Polygonprofil der Welle nach Art eines Gleitlagerflächenpaares aufeinander sitzen.

Das spiralartig verdrehte Polygonprofil der Welle kann dabei vorteilhafterweise einen flachgedrückten Querschnitt besitzen, z. B. rechteckig oder oval ausgebildet sein. Um einen günstigen Momentenabtrag zu erzielen, kann der Querschnitt vorteilhafterweise eine Längsachse besitzen, die um zumindest 30 %, vorzugsweise mehr als 50 %, länger ist als die Querachse des Querschnitts. Zwar würde grundsätzlich auch ein quadratischer Querschnitt oder ein Sechseckprofil verwendbar sein, bei denen das Verhältnis von Längsachse zu Querachse des Querschnitts im wesentlichen 1:1 beträgt. Hier ergeben sich jedoch weniger günstige Hebelverhältnisse für den Momentenabtrag als bei einem flachgedrückten Querschnitt. Vorteilhafterweise ist der Querschnitt auch bei Welle frei von scharfen Knicken oder Kanten ausgebildet, um die Dichtbarkeit zu verbessern.

Die Erfindung wird nachfolgend anhand bevorzugter Ausführungsbeispiele und zugehöriger Zeichnungen näher erläutert. In den Zeichnungen zeigen:
- Fig. 1:: eine schematische Seitenansicht einer Hub-/Schwenkvorrichtung für eine Ladebordwand mit zwei separaten Drehmotoren nach einer vorteilhaften Ausführung der Erfindung, wobei in den Darstellungen (a) bis (d) verschiedene Stellungen der Ladebordwand gezeigt sind,
- Fig. 2:: eine schematische Seitenansicht der Hub-/Schwenkvorrichtung ähnlich Fig. 1, wobei bei dieser Ausführung die Ladebordwand in sich zusammenklappbar ausgebildet und von der Hub-/Schwenkvorrichtung unter den Boden des Fahrzeugchassis geschwenkt werden kann, wobei die Darstellungen (a) bis (e) verschiedene Stellungen der Ladebordwand zeigen,
- Fig. 3:: eine schematische Seitenansicht der Hub-/Schwenkvorrichtung ähnlich Fig. 1, wobei bei dieser Ausführung die Ladebordwand in sich zusammenklappbar ausgebildet und von der Hub-/Schwenkvorrichtung an die Hubschwenkarme des Fahrzeugchassis angeklappt werden kann, wobei die Darstellungen (a) bis (e) verschiedene Stellungen der Ladebordwand zeigen,
- Fig. 4:: einen Längsschnitt durch die Hubarme der Hub-/Schwenkvorrichtung aus den vorhergehenden Figuren, die die beiden separaten Drehmotoren in den beiden Gelenkpunkten zeigt,
- Fig. 5:: eine Draufsicht auf die Ölzuführung in die Motorwelle des ersten Drehmotors,
- Fig. 6:: einen Längsschnitt durch eine Variante des Drehmotors für die Hubschwenkarme, dessen Ölzuführung über das Motorgehäuse erfolgt,
- Fig. 7:: einen Längsschnitt durch einen Drehmotor der Hub-/Schwenkvorrichtung aus den vorhergehenden Figuren, wobei eine Ölzuführung über die Schwenkarme gezeigt ist und der Drehmotor in einer im Vergleich zur Fig. 6 anderen Stellung gezeigt ist,
- Fig. 8:: einen Längsschnitt durch einen Drehmotor der Hub-/Schwenkvorrichtung aus den vorhergehenden Figuren nach einer alternativen Ausbildung, nach der auf der Motorwelle zwei Kolbenpaare sitzen,
- Fig. 9:: einen Längsschnitt durch den Drehmotor aus Fig. 8 in einer anderen Drehstellung,
- Fig. 10:: eine schematische Seitenansicht einer Hub-/Schwenkvorrichtung nach einer weiteren Ausführung der Erfindung, bei der die beiden Drehmotoren koaxial zueinander angeordnet und beide in die Hubarmschwenkachse integriert sind, wobei die Übertragung der Drehbewegung auf die Ladebordwand über einen Lenker erfolgt, wobei die Darstellungen (a) bis (d) verschiedene Stellungen der Bordwand zeigen,
- Fig. 11:: einen Längsschnitt durch die zu einer Motoreinheit zusammengefassten beiden Drehmotoren aus Fig. 10,
- Fig. 12:: einen Längsschnitt durch die Motoreinheit aus Fig. 11 in einer anderen Drehstellung,
- Fig. 13:: einen Querschnitt durch einen Drehmotor nach einer Ausführung nach einer der vorhergehenden Figuren mit einem ovalen Querschnitt, und
- Fig. 14:: einen Längsschnitt durch den Drehmotor aus Fig. 13.

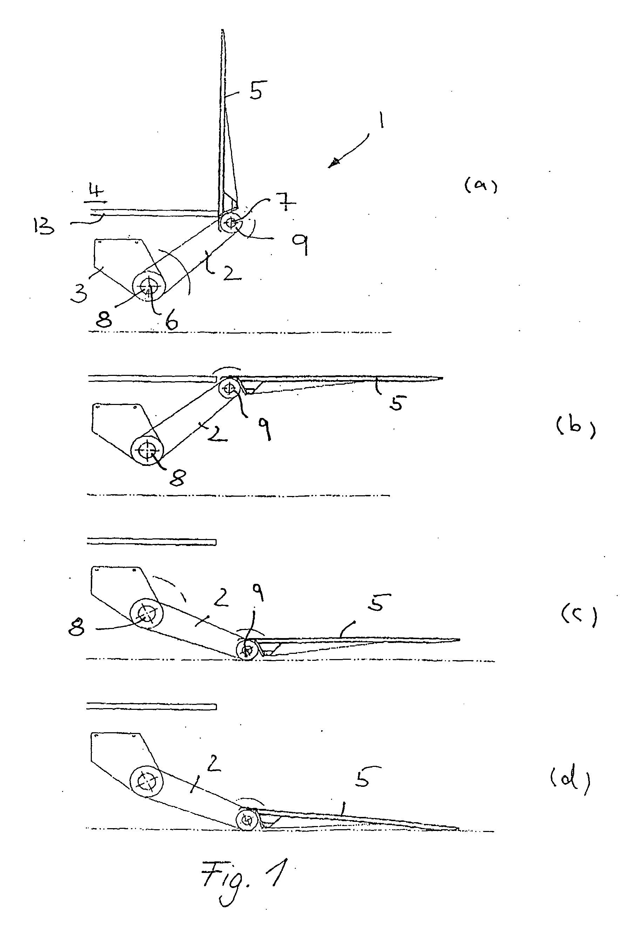

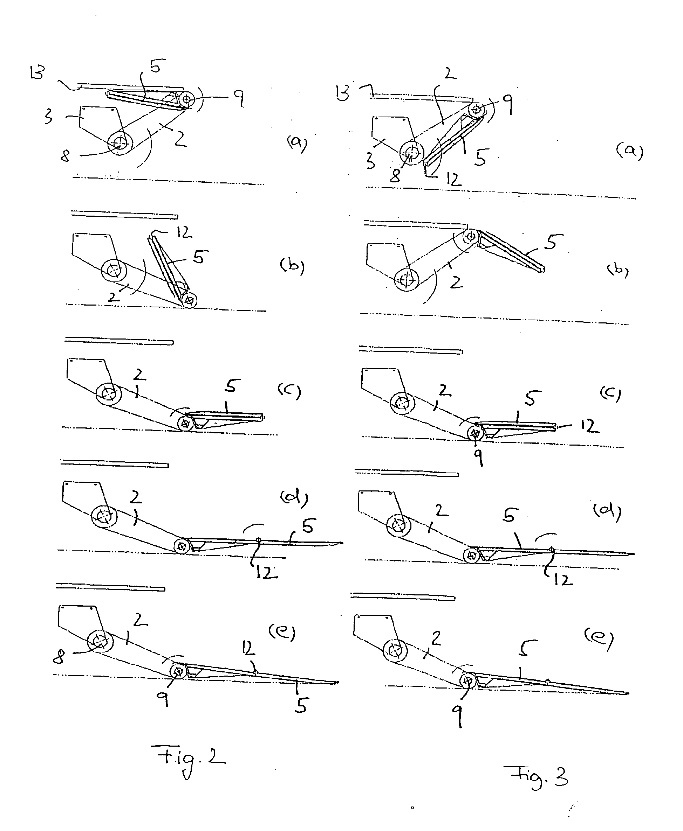

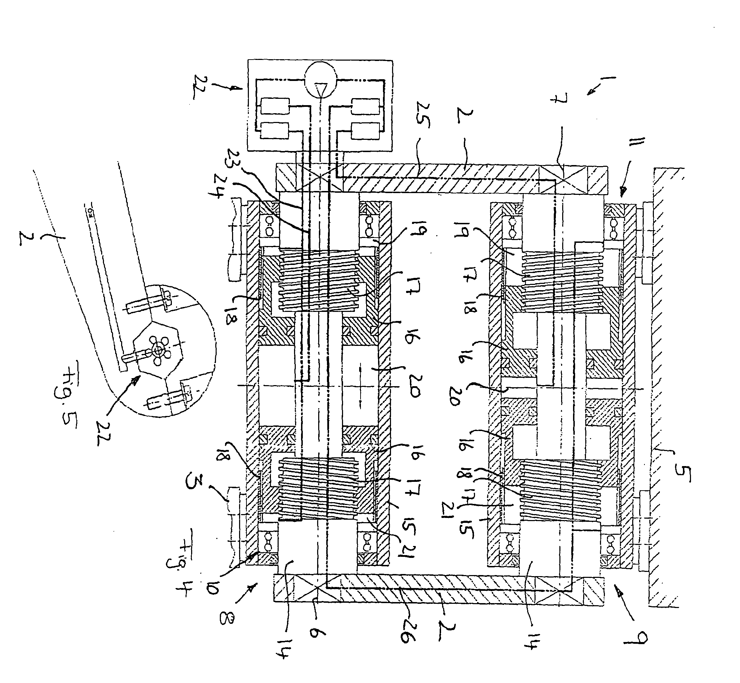

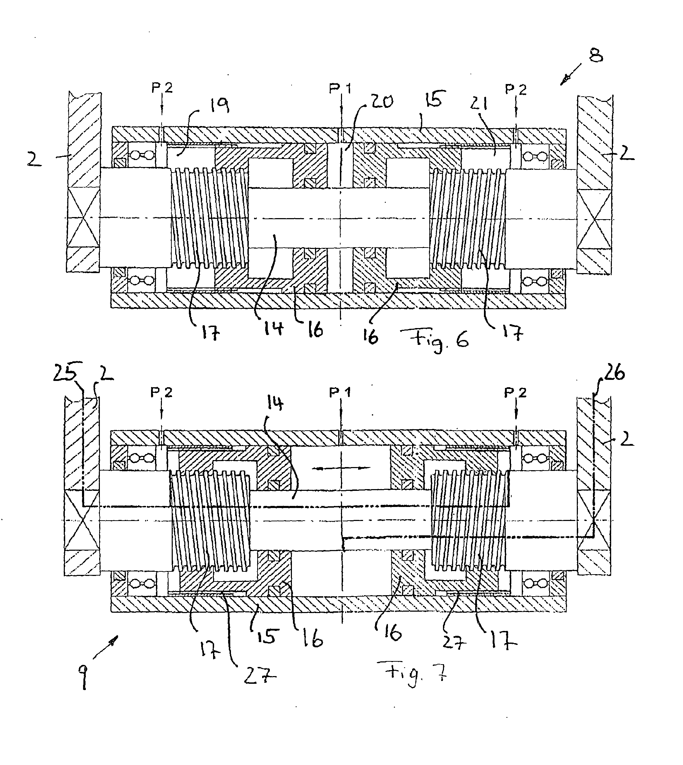

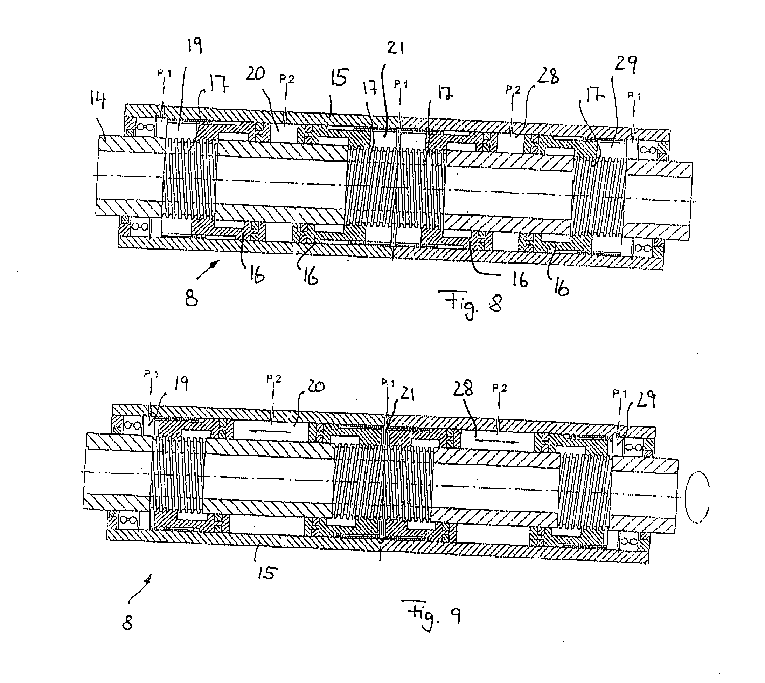

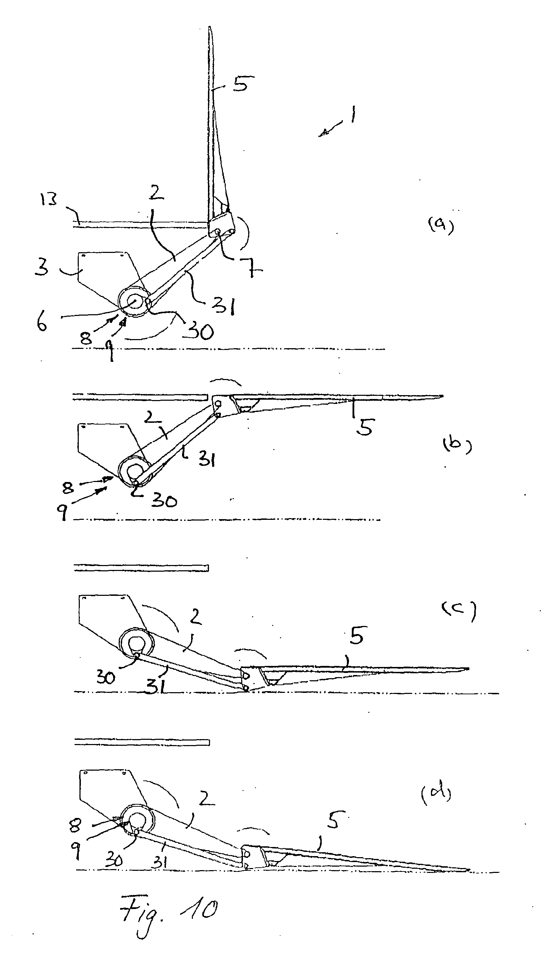

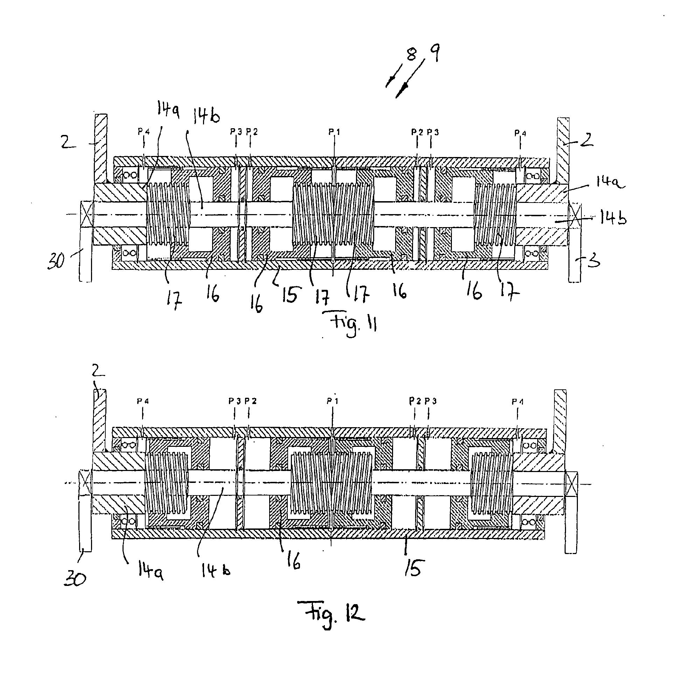

Die in Figur 1 gezeigte Hub-/Schwenkvorrichtung 1 umfasst ein Paar rechts und links unter dem Fahrzeugheck angeordnete Hubarme 2, die einerseits am Chassis 3 des Fahrzeugs 4 angelenkt sind und andererseits die Ladebordwand 5 tragen. Die Hubarme 2 sind dabei an dem Fahrzeugchassis 3 um eine liegende Hubarmschwenkachse 6 schwenkbar gelagert, die sich quer zur Längsrichtung der Hubarme 2 erstreckt und in der gezeichneten Ausführung, in der die Ladebordwand 5 am Heck des Fahrzeugs angeordnet ist, quer zur Fahrtrichtung des Fahrzeugs 4 ausgerichtet ist.

Weiterhin ist die Ladebordwand 5 relativ zu den Hubarmen 2 um eine Ladebordwandschwenkachse 7 schwenkbar, die sich parallel zu der Hubarmschwenkachse 6 erstreckt.

Der Hubarmschwenkachse 6 sowie der Ladebordwandschwenkachse 7 sind zwei separate Drehmotoren 8 bzw. 9 zugeordnet, die vorteilhafterweise in das die Hubarmschwenkachse 6 definierende Hubarmschwenklager 10 bzw. das die Ladebordwandschwenkachse 7 definierende Ladebordwandschwenklager 11 integriert sind, vorteilhafterweise diese beiden Schwenklager 10 und 11 bilden.

Die beiden Drehmotoren 8 und 9 sind voneinander unabhängig ansteuerbar, so dass grundsätzlich die Ladebordwand unabhängig von der Stellung bzw. Bewegung der Hubarme 2 verschwenkt werden kann. Selbstverständlich kann eine Steuerung vorgesehen sein, die eine Ladebordwandschwenkbewegung in Abhängigkeit der Stellung bzw. Bewegung der Hubarme 2 vorgibt, insbesondere um beim Absenken der Hubarme 2 die Ladebordwand 5 derart gegenüber den Hubarmen 2 zu verschwenken, dass eine von der gegebenenfalls geneigten Fahrzeuglage unabhängige Horizontalführung der Ladebordwand 5 möglich ist. Dies zeigen die Darstellungen (b), (c) und (d) der Figur 1.

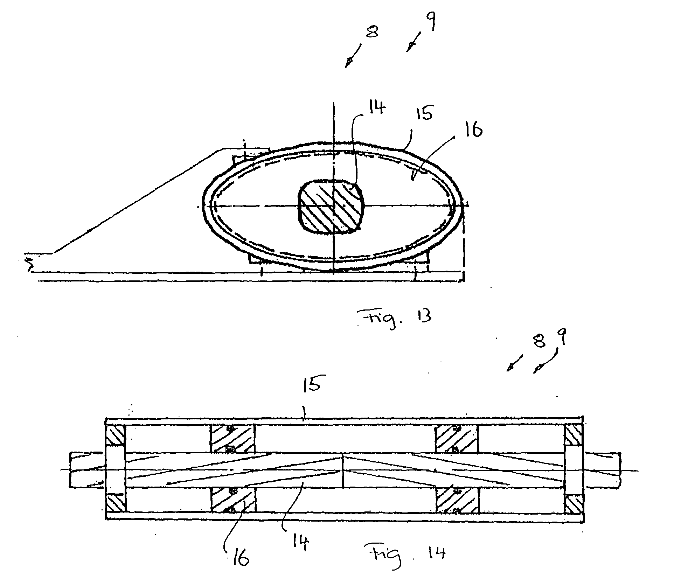

Noch deutlicher wird die beliebig programmierbare Bewegbarkeit der Bordwand relativ zu den Hubarmen aus den Darstellungen der Figuren 2 und 3, in denen die Ladebordwand 5 zusammenklappbar ausgebildet ist, d.h. zwei um eine Klappachse 12, die parallel zu der Ladebordwandschwenkachse 7 verläuft, zusammenklappbare Hälften 5a und 5b aufweist (vgl. Figuren 2 und 3). Wie die Darstellung der Figur 2 zeigt, kann der zweite Drehmotor 9 insbesondere dazu verwendet werden, die zusammengeklappte Ladebordwand 5 vor dem Anheben der Hubarme 2 so weit auf die Hubarme 2 zuzuschwenken, dass beim Nachobenschwenken der Hubarme 2 die zusammengeklappte Ladebordwand 5 unter den Fahrzeugboden 13 fährt. Alternativ kann durch den zweiten Drehmotor 9 an der Ladebordwandschwenkachse 7 die zusammengeklappte Ladebordwand 5 nach dem Anheben der Hubarme 2 gegenläufig zur Schwenkbewegung der Hubarme 2 nach unten an die Hubarme 2 herangeklappt werden, wie dies die Darstellung (a) in Figur 3 zeigt. Vergleicht man die Darstellungen 2 (a) und 3 (a), ist erkennbar, dass durch den zweiten Drehmotor 9 die Ladebordwand 5 über einen Bereich von mehr als 270° gegenüber den Hubarmen 2 verschwenkt werden kann. Dies ist mit einer herkömmlichen Lenker- und Schwenkhebelkopplung schwerlich erreichbar.

Zudem wird durch die separaten Drehmotoren der bei herkömmlichen Hub-/Schwenkantrieben unüberwindbare Nachteil vermieden, dass in der angehobenen Stellung der Hubarme 2 bei noch horizontaler Ladebordwand 5 ein Spalt zwischen der Ladebordwand und dem Fahrzeugboden verbleibt. Dieser Spalt bzw. eine den Spalt mit sich bringende Rundung der Ladebordwandkante ist im Stand der Technik mit Zwangssteuerung der Schwenkbewegung der Ladebordwand in Abhängigkeit von der Hubarmstellung notwendig, um beim weiteren Nachobenschwenken der Ladebordwand eine Kollision mit der Ladebodenkante zu vermeiden und auch, um die bei Ausschlagen der Zylinderlager notwendigen Toleranzen zu schaffen. Die unabhängige Ansteuerbarkeit der beiden Drehmotoren erlaubt es jedoch, die Hubarme ein kleines Stück abzuwippen und damit die Ladebordwand von der Ladebodenkante wegzubewegen, bevor die Ladebordwand ganz nach oben geschwenkt und die Hubarme sodann wieder gänzlich aufgewippt werden. Selbiges gilt natürlich umgekehrt beim Anfahren der genannten Zwischenstellung zum Umladen vom Ladeboden auf die Ladebordwand von oben aus der Transportstellung und/oder von unten aus der Bodenstellung. Wie Figur 1 (b) zeigt, können die Hubarme 2 in ihre gänzlich angehobene Stellung gebracht werden, wenn die Ladebordwand horizontal steht, so daß ein Spalt zwischen Ladebodenkante und Ladebordwand nahezu gänzlich vermieden ist.

Die beiden Drehmotoren 8 und 9 sind vorteilhafterweise, wie dies Figur 4 zeigt, jeweils hydraulische Drehmotoren mit einer Motorwelle 14, die in einem zylindrischen, schalenförmigen Gehäuse 15 aufgenommen ist und auf beiden Stirnseiten des genannten Gehäuses 15 aus diesem heraustritt. Auf der Motorwelle 14 sitzen zwei als Kolben ausgebildete Antriebsstücke 16, die mit jeweils einem Gewindeabschnitt 17 der Motorwelle 14 in Eingriff stehen. Die Gewindeabschnitte 17 der Motorwelle 14 sind dabei gegenläufig als Links- und Rechtsgewinde ausgeführt, so dass die beiden Antriebsstücke 16 gegenläufig arbeiten.

Die Kolben bildenden Antriebsstücke 16 sind drehfest in dem Gehäuse 15 axial verschieblich geführt, beispielsweise über Keilwellen-/Nabenprofilabschnitte 18. Die Kolben bildenden Antriebsstücke 16 sind gegenüber dem Gehäuse 15 abgedichtet, so dass auf beiden Seiten eines jeden Kolbens Druckkammern 19, 20 und 21 gebildet sind, wobei zwischen den beiden Kolben eine gemeinsame Druckkammer 20 vorgesehen ist.

Durch Druckbeaufschlagung der zwischen den beiden Antriebsstücken 16 vorgesehenen Druckkammer 20 werden diese auseinandergedrückt, während eine Druckbeaufschlagung der außenliegenden Druckkammern 19 und 21 zu einem Zusammendrücken der Antriebsstücke 16 führt. Die Axialbewegung der Antriebsstücke 16 wird über die Gewindeabschnitte 17 in eine entsprechende Drehbewegung der Motorwelle 14 umgesetzt. Durch die gegenläufige Anordnung der beiden Antriebsstücke 16 können Axialkräfte auf die Motorwelle 14 vermieden werden.

Wie Figur 4 zeigt, ist das Gehäuse 15 des ersten Drehmotors 8 unmittelbar an dem Fahrzeugchassis 3 drehfest befestigt. An dem Gehäuse 15 des zweiten Drehmotors 9 ist hingegen die Ladebordwand 5 drehfest befestigt. Dabei kann in vorteilhafter Weise auch vorgesehen sein, daß die das Gehäuse stirnseitig verschließenden Lagerdeckel, die mit dem rohrförmigen Gehäuse 15 drehfest verbunden, insbesondere verschraubt oder verschweißt sein können, über einen Anlenkhebel die drehfeste Verbindung bewirken. Gleichzeitig können die Motorwellen an den Lagerdeckeln gelagert sein, so daß eine direkte Krafteinleitung von der Motorwelle 14 her und damit geringe Biegemomente auf das Gehäuse 15 erreicht werden können.

Ein besonderer Vorteil der hydraulischen Drehmotoren ist ihre kompakte, insbesondere flache Bauweise. Wie aus Figur 1 (d) besonders deutlich wird, kann durch den geringen Querschnitt des zweiten Drehmotors 9 der hubarmseitige Anlenkpunkt der Ladebordwand besonders tief über den Boden gebracht und damit die Ladebordwand mit minimalem Neigungswinkel auf den Boden gesetzt werden. Dies ist bei herkömmlichen Hubwerken nahezu unmöglich, da die an der Ladebordwand anzulenkenden Schwenklenker dort bezüglich der Ladebordwandschwenkachse einen ausreichenden Hebel besitzen müssen, was unvermeidlich eine größere Höhe des hubarmseitigen Ladebordwandpunktes über dem Boden bedingt.

Die aus dem Gehäuse 15 heraustretenden Stummel der Motorwelle 14 tragen die beiden Hubarme 2, die an der Motorwelle 14 selbstverständlich drehfest befestigt sind. Die anderen Enden der Hubarme 2 sind mit den ebenfalls aus dem Gehäuse 15 heraustretenden Stummel der Motorwelle 14 des zweiten Drehmotors 9 verbunden.

Die Druckfluidspeisung der beiden Drehmotoren 8 und 9 erfolgt jeweils über die Motorwellen 14. Eine zentrale Druckfluidversorgung 22 sitzt an dem axialen Ende der Motorwelle 14 des ersten Drehmotors 8. Über Druckfluidkanäle 23 und 24 in der Motorwelle 14 des ersten Drehmotors 8 können dessen Druckkammern 18 und 21 oder alternativ 20 mit Hydrauliköl beaufschlagt werden, um die Kolben in der gewünschten Weise hin und her zu bewegen.

Weiterhin zweigen von der zentralen Druckfluidversorgung 22 in die Motorwelle 14 des ersten Drehmotors 8 eingebrachte Druckfluidkanäle 25 und 26 ab in die daran befestigten Hubarme 2, durch die hindurch die genannten Druckkanäle 25 und 26 fortgesetzt sind. Sie führen über die genannten Hubarme 2 in die Motorwelle 14 des zweiten Drehmotors 9, um dort in dessen Druckkammern 18 und 21 bzw. 20 zu münden (vgl. Figur 4). Diese Druckfluidversorgung des zweiten Drehmotors 9 über die Hubarme 2 vermeidet Hydraulikschläuche und erlaubt die Montage der Hub-/Schwenkvorrichtung mit nur einem Druckversorgungsanschluss.

Die zentrale Druckfluidversorgung 22 kann mit der Motorwelle 14 des ersten Drehmotors 8 direkt in Fluidverbindung stehen. Optional kann sie auch mittels einer hydraulischen Drehdurchführung verbunden werden.

Figur 5 zeigt die Verschraubung der Motorwelle 14 des ersten Drehmotors 8 mit dem Hubarm 2 mit gleichzeitig abdichtender Verbindung der Druckölversorgung.

Die Kanäle können optional auch für Steuerungszwecke bzw. zum Verstellen der Faltladebordwand dienen.

Figur 6 zeigt eine alternative Ausführung des Drehmotors 8 bzw. des Drehmotors 9, bei dem die Druckzuführung in die Druckkammern 19, 20 und 21 über das Gehäuse 15 erfolgt.

Figur 7 zeigt beide Optionen, nämlich dass die Druckkammern 19, 20 und 21 sowohl über das Gehäuse 14 als auch über die Motorwelle 14 und die daran angeschlossenen Hubarme 2 erfolgen kann.

Alternativ zu der zuvor beschriebenen drehfesten Führung der die Kolben bildenden Antriebsstücke 16 am Gehäuse 15 durch Keilwellen-Nabenverbindungen können die Kolbenaußenführungen an dem Gehäuse 15 vorteilhafterweise auch zur Erzielung größerer Drehwinkel oder Drehmomente ebenfalls als Gewindeverzahnung, insbesondere Steilgewindeverzahnung 27, ausgeführt werden, wie dies Figur 7 zeigt. Der Gewindeeingriff zwischen den Antriebsstücken 16 und dem Gehäuse 15 kann zusätzlich oder alternativ zu dem Gewindeeingriff mit der Motorwelle 14 vorgesehen sein. Letzterer kann ggf. durch eine drehfeste Axialführung, beispielsweise durch eine Keilwellen-/Nabenverbindung, ersetzt werden, so dass die Antriebsstücke lediglich axial verschieblich, jedoch drehfest auf der Motorwelle 14 geführt sind. Vorteilhafterweise jedoch kann der Gewindeeingriff an der Kolbenaußenführung zusätzlich zu dem Gewindeeingriff auf der Motorwelle 14 vorgesehen sein, um größere Drehwinkel oder Drehmomente zu erreichen. Wahlweise können auch, um die Reibung zu vermindern, kugel- oder rollenartige Leichtlaufführungen vorgesehen sein.

Um bei reduziertem Durchmesser der Drehmotoren 8 und 9 dennoch das gewünschte Drehmoment erzielen zu können, können die Drehmotoren 8 und 9 auch als Doppelkolbenmotor ausgebildet sein, wie dies die Figuren 8 und 9 zeigen. Auf der Motorwelle 14 sitzt hierbei anders als bei den zuvor beschriebenen Ausführungen nicht nur ein Paar Antriebsstücke 16, sondern vielmehr zwei Paare von jeweils gegenläufig ausgebildeten Antriebsstücken 16, die jeweils mit gegenläufig ausgeführten Gewindeabschnitten 17 der Motorwelle 14 in Schraubeingriff stehen. Werden die Druckkammern 19, 21 und 29 mit dem Druck P1 beaufschlagt, fahren die gegenläufigen Kolbenpaare zusammen, wie dies Figur 8 zeigt. Werden hingegen die Druckkammern 20 und 28 mit dem Druck P2 beaufschlagt, fahren die als Kolben ausgebildeten Antriebsstücke 16 auseinander, wie dies Figur 9 zeigt, so dass sich die jeweiligen Drehbewegungen der Motorwelle 14 einstellen.

In der in Figur 8 und 9 dargestellten Ausführung werden die Druckkammern 19, 20, 21, 28 und 29 über das Gehäuse 15 gespeist. Es versteht sich jedoch, dass auch hier eine Druckfluidzuführung über die Motorwelle 14 vorgesehen sein kann, wie dies vorher beschrieben wurde.

Eine alternative Ausführung der Hub-/Schwenkvorrichtung 1 zeigt Figur 10. Bezüglich der Anordnung der Hubarme 2 und der schwenkbaren Lagerung der Ladebordwand 5 an den Hubarmen 2 entspricht diese Ausführung grundsätzlich der zuvor beschriebenen nach den Figuren 1 bis 3, jedoch sitzt der zweite Drehmotor 9 für die Schwenkbewegung der Ladebordwand 5 relativ zu den Hubarmen 2 nicht an der Gelenkstelle zwischen den Hubarmen 2 und der Ladebordwand 5. Vielmehr ist der zweite Drehmotor 9 mit dem ersten Drehmotor 8 zu einer gemeinsamen Motoreinheit zusammengefasst, wie dies die Figuren 11 und 12 zeigen. Diese zusammengefasste Motoreinheit umfasst zwei koaxial zueinander angeordnete Motorwellen 14 (a) und 14 (b), von denen eine mit den Hubarmen 2 drehfest verbunden ist und die andere eine Kurbel 30 antreibt, die über einen Lenker 31 mit der Ladebordwand 5 gekoppelt ist, um diese gegenüber den Hubarmen 2 zu schwenken (vgl. Figur 10).

Wie die Figuren 11 und 12 zeigen, ist die Motorwelle 14 (a) des ersten Drehmotors 8, die mit den Hubarmen 2 drehfest verbunden ist, als Hohlwelle ausgebildet, so dass sich die Motorwelle 14 (b) des zweiten Drehmotors 9 durch die Motorwelle 14 (a) des ersten Drehmotors 8 hindurch erstrecken kann. Sie ragt axial aus den Stirnseiten der Motorwelle 14 (a) hervor und ist dort mit der Kurbel 30 drehfest und über diese mit dem Lenker 31 verbunden. Der zweite Drehmotor 9 ist sozusagen in dem ersten Drehmotor 8 angeordnet. Die beiden Drehmotoren 8 und 9 besitzen dabei ein gemeinsames Gehäuse 15, in dem die von den jeweiligen Antriebsstücken 16 gebildeten Kolben in der zuvor beschriebenen Weise geführt und fluiddicht aufgenommen sind, um die entsprechenden Druckkammern zu bilden.

Die beiden Kurbeln 30 rechts und links auf der Motorwelle 14 (b) sind durch letztere synchronisiert. Dies ist bei den beiden Hubarmen 2 nicht mehr der Fall, da die Motorwelle 14 (a) des ersten Drehmotors 8 nicht mehr durchgehend ausgebildet ist. Die Synchronisation der Hubarme 2 bzw. der geteilten Motorwelle 14 kann jedoch über ein Torsionsrohr hergestellt werden.

Um eine besonders niedrige Bauhöhe zu erreichen, so dass die Hub-/Schwenkvorrichtung 1 besonders kompakt unter dem Fahrzeugboden angeordnet werden kann, sieht die Ausführung nach Figur 13 vor, dass der Drehmotor 8 keinen kreisrunden Querschnitt, sondern einen flachgedrückten, insbesondere ovalen bzw. an die Einbauverhältnisse angepassten Querschnitt aufweist. Sowohl das Gehäuse 15 als auch die darin geführten Kolben, die von den Antriebsstücken 16 gebildet werden, sind oval im Querschnitt ausgebildet. Die hierdurch erreichbare kompakte Bauweise ist sehr wichtig, um flache Ablaufwinkel einer auf dem Boden abgesetzten Ladebordwand zu realisieren. Zudem kann über die Ovalform gleichzeitig das Drehmoment auf den Kolben wirksam aufgenommen werden, so dass ggf. auf eine drehfeste Längsführung, beispielsweise in Form einer Keilwellen-/Nabenverbindung, verzichtet werden kann.

Weiterhin zeigen die Figuren 13 und 14, dass die Motorwelle 14 als verdrehte Polygon- bzw. Vielkeilwelle ausgebildet sein kann, wodurch eine wirtschaftliche Fertigung erreicht werden kann. Die den Kolben bildenden Antriebsstücke 16 können direkt auf dem Wellenprofil abgedichtet werden (vgl. Figur 14).

## Patentansprüche

1. Hub-/Schwenkvorrichtung für Ladebordwände (5) und/oder Laderampen von Fahrzeugen und dergleichen, mit zumindest einem Hubarm (2), der einerseits durch ein Hubarmschwenklager (10) um eine liegende Hubarmschwenkachse (6) an dem Fahrzeug (4) schwenkbar anlenkbar ist und andererseits ein Ladebordwandschwenklager (11) zur schwenkbaren Befestigung der Ladebordwand (5) um eine liegende Ladebordwandschwenkachse (7) aufweist, wobei dem Hubarmschwenklager (10) und/oder dem Ladebordwandschwenklager (11) ein Schwenkantrieb (8, 9) zum Schwenken des Hubarms (2) um die Hubarmschwenkachse (6) und/oder der Ladebordwand (5) zum Hubarm (2) zugeordnet ist, **dadurch gekennzeichnet, dass** der Schwenkantrieb (8, 9) von einem hydraulischen Drehmotor gebildet ist, der eine in einem Gehäuse (15) drehbar gelagerte Motorwelle (14) aufweist, die mit zumindest einem axial antreibbaren, gegenüber dem Gehäuse (15) drehfesten Antriebsstück (16) in Schraubeingriff steht.

2. Hub-/Schwenkvorrichtung nach dem vorhergehenden Anspruch, wobei ein erster Drehmotor (8) zum Verschwenken des Hubarms (2) um die Hubarmschwenkachse (6) und ein zweiter Drehmotor (9) zum Schwenken der Ladebordwand (5) oder -rampe relativ zu dem zumindest einen Hubarm (2) um die Ladebordwandschwenkachse (7) vorgesehen ist.

3. Hub-/Schwenkvorrichtung nach einem der vorhergehenden Ansprüche, wobei das mit der Motorwelle (14) in Schraubeingriff stehende Antriebsstück (16) von einem hydraulisch beaufschlagbaren Kolben axial verschiebbar ist, insbesondere selbst einen Kolben bildet.

4. Hub-/Schwenkvorrichtung nach einem der vorhergehenden Ansprüche in Verbindung mit Anspruch 2, wobei der zweite Drehmotor (9) an dem auskragenden Ende des zumindest einen Hubarms (2) angeordnet ist und/oder das Ladebordwandschwenklager (11) bildet.

5. Hub-/Schwenkvorrichtung nach dem vorhergehenden Anspruch, wobei in dem zumindest einen Hubarm (2) zumindest ein Hydraulikkanal (25, 26) zur Versorgung des zweiten Drehmotors (9) mit Hydrauliköl vorgesehen ist.

6. Hub-/Schwenkvorrichtung nach einem der vorhergehenden Ansprüche 1 bis 3 in Verbindung mit Anspruch 2, wobei der zweite Drehmotor (9) mit dem ersten Drehmotor (8) zu einer Motoreinheit zusammengefasst ist und/oder am Hubarmschwenklager (10) angeordnet und über einen Schwenklenker (31) mit der Ladebordwand (5) koppelbar ist.

7. Hub-/Schwenkvorrichtung nach dem vorhergehenden Anspruch, wobei die Motorwelle (14b) des einen Drehmotors (9) in der hohl ausgebildeten Motorwelle (14a) des anderen Drehmotors (8) aufgenommen ist und die beiden Drehmotoren (8, 9) ein gemeinsames Gehäuse (15) aufweisen, in dem die Antriebsstücke (16) der beiden Drehmotoren geführt sind.

8. Hub-/Schwenkvorrichtung nach einem der vorhergehenden Ansprüche, wobei eine zentrale Ölzuführung (22) an der Motorwelle (14) des Drehmotors (8) vorgesehen ist, wobei in der Motorwelle (14) ein Druckkanal (23, 24) zur Speisung der Druckkammern (19, 20, 21) des Drehmotors (8) vorgesehen ist und eine Abzweigung in der Motorwelle (14) in einen Druckkanal (25, 26) in dem damit verbundenen Hubarm (2) führt.

9. Hub-/Schwenkvorrichtung nach einem der vorhergehenden Ansprüche, wobei das Gehäuse (15) und/oder der Kolben des ersten und/oder zweiten Drehmotors (8, 9) einen von der Kreisform abweichenden, vorzugsweise flachgedrückten Querschnitt, insbesondere einen etwa elliptischen oder ovalen Querschnitt, besitzt.

10. Hub-/Schwenkvorrichtung nach einem der vorhergehenden Ansprüche, wobei ein den Schraubeingriff bewirkendes Flächenpaar an Motorwelle (14) und Antriebsstück (16) gleichzeitig ein Dichtflächenpaar zur Abdichtung des Antriebsstücks (16) gegenüber der Motorwelle (14) sowie einer das Antriebsstück (16) beaufschlagenden Druckmediumkammer bildet.

11. Hub-/Schwenkvorrichtung nach einem der vorhergehenden Ansprüche, wobei die Motorwelle (14) zumindest einen Schraubeingriffabschnitt aufweist, der als spiralartig in der Längsachse der Motorwelle verdrehtes Polygonprofil ausgebildet ist.

12. Hub-/Schwenkvorrichtung nach einem der vorhergehenden Ansprüche, wobei das Antriebsstück (16) beidseitig gleich große effektive Druckbeaufschlagungsflächen aufweist, die insbesondere etwa einer Gehäuseinnenquerschnittsfläche abzüglich einer Motorwellenquerschnittsfläche entspricht.

13. Hub-/Schwenkvorrichtung nach einem der vorhergehenden Ansprüche, wobei das Gehäuse (15) des ersten und/oder zweiten Drehmotors (8, 9) eine geschlossene zylindrische Schale bildet, aus der im wesentlichen lediglich die Enden der Motorwelle (14) herausragen.

14. Hub-/Schwenkvorrichtung nach einem der vorhergehenden Ansprüche, wobei der erste und/oder zweite Drehmotor (8, 9) zumindest zwei gegenläufig ausgebildete Antriebsstücke (16) aufweist, von denen eines linksgängig und ein anders rechtsgängig mit der Motorwelle (14) in Schraubeingriff steht.

15. Hub-/Schwenkvorrichtung nach einem der vorhergehenden Ansprüche, wobei die Ladebordwand (5) zwei Ladebordwandteile aufweist, die klappbar um eine zur Ladebordwandschwenkachse (7) parallele Klappachse (12) miteinander verbunden sind, und in eine an den zumindest einen Hubarm (2) angeklappte Transportstellung klappbar ist.

16. Hub-/Schwenkvorrichtung nach einem der vorhergehenden Ansprüche, wobei zumindest der zweite Drehmotor (9) einen Schwenkbereich von über 100°, vorzugsweise von über 180°, aufweist.

17. Hub-/Schwenkvorrichtung nach einem der vorhergehenden Ansprüche, wobei sie frei von einer mechanischen Zwangskopplung, die eine Hubarmbewegung zwangsweise in eine Ladebordwandbewegung relativ zu dem Hubarm (2) umsetzt, ausgebildet ist.

18. Hub-/Schwenkvorrichtung nach einem der vorhergehenden Ansprüche in Verbindung mit Anspruch 2, wobei der erste und der Drehmotor (8, 9) von einer Steuervorrichtung ansteuerbar ist, derart, daß für eine vorgegebene Hubarmstellung verschiedene Ladebordwandstellungen und/oder für eine relativ zum Hubarm vorgegebene Ladebordwandstellung verschiedene Hubarmstellungen anfahrbar sind.

19. Hub-/Schwenkvorrichtung nach dem vorhergehenden Anspruch, wobei die Steuervorrichtung derart ausgebildet ist, daß für eine Bewegung der Ladebordwand zwischen zwei vorgebbaren Stellungen, insbesondere zwischen der hochgeklappten Transportstellung und der abgesenkten Bodenstellung, verschiedene Kinematikabläufe auswählbar sind und/oder der Ablauf der Hubarmschwenkbewegung in Abhängigkeit der Ladebordwandschwenkbewegung und umgekehrt veränderbar ist.

20. Hub-/Schwenkvorrichtung nach dem vorhergehenden Anspruch, wobei die Steuervorrichtung eine Wahleinrichtung aufweist, mittels derer zwischen einer lastfreien Hub-/Senkroutine, bei der die Ladebordwand ohne Anfahren der Umladestellung, in der die Ladebordwand von der Ladebodenkante etwa horizontal wegstehend an die Ladebodenkante angrenzt, zwischen der abgesenkten Bodenstellung und der hochgeklappten Transportstellung hin- und herfahrbar ist, und einer lasthebenden Hub-Senkroutine, bei der die Ladebordwand beim Anheben aus der abgesenkten Bodenstellung und/oder beim Absenken aus der angehobenen Transportstellung die genannte Umladestellung anfährt, wählbar ist.

21. Hub-/Schwenkvorrichtung nach einem der beiden vorhergehenden Ansprüche, wobei die Steuervorrichtung derart ausgebildet ist, daß zum Anfahren und/oder Verlassen der Umladestellung, in der die Ladebordwand von der Ladebodenkante etwa horizontal wegstehend an die Ladebodenkante angrenzt, zunächst die Ladebordwand mit dem zweiten Drehmotor (9) in die gewünschte Ausrichtung zum Hubarm (2) gebracht wird und sodann der Hubarm durch den ersten Drehmotor (8) ohne Verschwenken der Ladebordwand verschwenkt wird, um die Ladebordwand an die Ladebodenkante zu bewegen.
